# EUROPÄISCHE PATENTSCHRIFT

(11) **EP 2 170 738 B1**
(45) Veröffentlichungstag und Bekanntmachung des Hinweises auf die Patenterteilung: **24.08.2011**
(21) Anmeldenummer: 08758834.9
(22) Anmeldetag: 28.05.2008
(51) Int. Cl.: B65D 88/12, E04B 1/343, B60R 3/00, E04F 11/06

(54) **ARBEITBÜHNENANORDNUNG FÜR EINEN CONTAINER**
WORKING PLATFORM ARRANGEMENT FOR A CONTAINER
DISPOSITIF DE PLATE-FORME DE TRAVAIL POUR CONTENEUR

(30) Priorität: 19.07.2007 DE 202007010089 U
(43) Veröffentlichungstag der Anmeldung: 07.04.2010
(73) Patentinhaber: WEW Westerwälder Eisenwerk GmbH, 57586 Weitefeld (DE)
(72) Erfinder: PFAU, Dieter, 57578 Elkenroth (DE)
(74) Vertreter: Samson & Partner
(86) Internationale Anmeldenummer: PCT/EP2008/004251
(87) Internationale Veröffentlichungsnummer: WO 2009/010124

(56) Entgegenhaltungen:
- EP-A- 1 541 501
- WO-A-2005/014411
- DE-U1- 29 506 846
- FR-A- 2 467 268
- US-A- 1 740 000
- US-B1- 6 431 093

## Beschreibung

Die vorliegende Erfindung betrifft eine Arbeitsbühnenanordnung für einen Container mit einer verstellbaren Arbeitsbühne, welche zwischen einer horizontalen Arbeitsstellung und einer Ruhestellung verstellbar ist gemäss dem Oberbegriff des Anspruchs 1.

Eine Anordnung gemäss dem Oberbegriff des Anspruchs 1 ist aus US 1,740,000 bekant.

Verstellbare Arbeitsbühnen sind aus dem LKW-Bereich als sogenannte Hubladebühnen bekannt. Solche Hubladebühnen sind in der Regel im Bereich einer Ladeöffnung oder eines Ladezugangs zu einem Laderaum, z.B. am hinteren Ende eines Kofferaufbaus, angeordnet. Solche Hubladebühnen dienen - wie der Name schon sagt - zum Be- und Entladen solcher Fahrzeuge. In ihrer Arbeitsstellung bilden sie in der Regel eine horizontale Plattform, die zwischen der Laderaumebene und dem Erdboden vertikal hin- und her verfahren werden kann. In ihrer Ruhestellung werden solche Hubladebühnen außerhalb eines solchen Kofferaufbaus angeordnet. Entweder werden sie direkt gegen den Öffnungsbereich geklappt oder unterhalb des Kofferaufbaus im Bereich des Fahrwerks eingefaltet. Hubladebühnen sind fahrzeuggebunden.

Im nachfolgenden bezeichnet der Begriff "Container" leer und gefüllt umschlagbare Transportbehälter, die mit normierten Außenmaßen (z.B. ISO-Maße) und über normale Umschlagelemente (z.B. ISO-Eckbeschläge) in vollem oder leerem Zustand umgeschlagen werden können, d.h. zwischen unterschiedlichen Verkehrsträgern (Schiene, Straße, See) umgeschlagen werden können. An Containern werden die oben beschriebenen Hubladebühnen nicht angeordnet.

Richtungsangaben wie rechts, links, oben, unten, vorne und hinten sind für einen auf einem Straßenfahrzeug angeordneten Container aus der Sicht des lenkenden Fahrers angegeben.

Neben sogenannten Boxcontainern für Stückgut gibt es auch sogenannte Tankcontainer oder containerisierte Transportsysteme für Flüssigkeiten, die einen Flüssigkeitstank und/oder einen Aggregatraum umfassen. In so einem Aggregatraum können unterschiedlichste Armaturen und Geräte angeordnet sein. So ein Containersystem ist beispielsweise aus der EP 1 688 370 A1 bekannt. Solche Anlagen werden oft auch auf Trägerfahrzeugen, also auf LKWs oder Anhängern eingesetzt und betrieben. Bedienelemente der Aggregate liegen dann oft so hoch, daß diese ohne Hilfsmittel nicht zugänglich sind. Hubladebühnen stehen meistens an solchen Fahrzeugen nicht zur Verfügung. Da sie normalerweise auch keine Sturzsicherung (Geländer) aufweisen, sind sie als Arbeitsbühnen zur Bedienung der Armaturen und Geräten von auf dem Fahrzeug angeordneten Containern auch nicht geeignet. Es gibt auch klappbare Arbeitsbühnen, die am hinteren Ende von Transporteinheiten angeordnet sind. Solche Arbeitsbühnen sind rucksackartig an den Transporteinheiten angeordnet, und zwar außerhalb deren Außenkonturen. Sie dienen dazu in schwierigem Gelände (uneben, schlammig, etc.) einen ebenen Zugangs/Arbeitsbereich zu Armaturen oder Aggregaten zu schaffen.

Aus US 1,740,000. und DE 295 06 846 sind klappbare Laderampen für Container bekannt, die jedoch auch keine Sicherungsanordnungen aufweisen und daher als Arbeitsplattform für Tätigkeiten in größerer Höhe ungeeignet sind.

Aus der EP 1 541 501 A1 ist eine Arbeitsbühne bekannt, die so ausgebildet und angeordnet ist, daß sie in ihrer Ruhestellung (eingeschoben) vollständig innerhalb der Außenkontur der Containeranordnung verläuft und in ihrer Arbeitsstellung ausgezogen) eine horizontale Plattform bildet (die dann nicht innerhalb der Außenkonturen verlaufen muß). So eine Arbeitsbühnenanordnung erweitert den Einsatzbereich solcher Container. Sie können zum einen auf Fahrzeugen eingesetzt werden, wo dann die Aggregate und Bedienelemente über die in ihrer Arbeitsstellung befindliche Arbeitsbühne zugänglich sind, ohne daß zusätzliche externe Steighilfen, Gerüste oder ähnliches erforderlich sind. Dadurch, daß die Arbeitsbühne in ihrer Ruhestellung innerhalb der Außenkontur des Containers angeordnet ist, kann der Container ohne Einschränkungen und ohne besondere Maßnahmen umgeschlagen und transportiert werden.

Einschieb-/ausziehbare Arbeitsbühnen haben jedoch den Nachteil, dass sie einen gewissen Bodenraum benötigen und dass der Einschubmechanismus insbesondere in Verbindung mit zur Fläche der Arbeitsbühne hin öffnenden Türen unter Umständen komplizierte Abdichtungsmechanismen erfordert. Solche Türen führen in der Regel zu einem Aggregatraum oder in das Innere des Containers.

Es besteht also die Aufgabe, eine verbesserte, sicherbare Arbeitsbühnenanordnung bereitzustellen, die in Verbindung mit einem Container, insbesondere mit einem Tankcontainer mit Aggregatraum, einsetzbar ist und dessen Kompatibilität im multimodalen Verkehr nicht beeinträchtigt.

Diese Aufgabe löst die Arbeitsbühnenanordnung gemäß Anspruch 1. Dabei ist die Arbeitsbühne verschwenkbar ausgebildet und verläuft in ihrer Ruhestellung vertikal und kann so einen entsprechenden Wandbereich am Container verschließen. Das heißt, die Arbeitsbühne kann gleichzeitig als Wandelement dienen bzw. als eine Zugangsöffnung verschließende Klappe ausgebildet sein.

Dabei ist die Arbeitsbühne mit einem Randbereich versehen, der den begehbaren Arbeitsbereich - in der Arbeitsstellung also die Plattformoberfläche - wenigstens teilweise so umrandet, daß dieser Randbereich einen Aufnahmeraum definiert, in dem eine aufstellbare Sicherungsanordnung vorgesehen werden kann. Solche Sicherheitsanordnungen sind dann erforderlich, wenn sich die Arbeitsplattform in einer gewissen Höhe befindet. Steht der Container beispielsweise auf einem Fahrzeug, so befindet sich die Plattform, wenn sie etwa mit der Unterseite des Containers fluchtend verläuft, in einer Höhe von ca. 140-160 cm. Arbeitsbereiche in dieser Höhe sind nach den allgemein üblichen Sicherheitsvorschriften durch Geländer zu sichern. Der Randbereich definiert klar den entsprechenden Aufnahmeraum, so daß bei der Konstruktion des Containers und bei der Anordnung möglicher Aggregate und anderer Elemente dieser verfügbare Raum leicht berücksichtigt werden kann, so daß die Arbeitsbühne und dort angeordneten Sicherungsanordnungen nicht mit anderen Bauteilen (Armaturen, Aggregate) am Container kollidieren, wenn sich die Arbeitsbühne (eingeklappt) in ihrer Ruhestellung befindet. Dadurch, daß dieser Bereich dann auch von außen unzugänglich ist, werden Fehlbedienungen und Schäden vermieden. Gemäß Anspruch 2 kann die Sicherungsanordnung als klappbares Geländerelement ausgebildet sein, das aufgestellt werden kann, wenn sich die Arbeitsbühne in ihrer Arbeitsstellung befindet und eine horizontale Plattform bildet, die dann von einem oder mehreren klappbaren Geländerelementen gesichert werden kann.

Die Weiterbildung gemäß Anspruch 3 sieht eine weitere Funktion des Randbereichs vor, der demnach als Dichtungselement dienen kann. Dabei kann entweder an der Kantenzone des Randbereichs ein elastisches Dichtungselement vorgesehen sein, das dann gegen eine entsprechende Gegenfläche am Container anliegt, oder die Kantenzone selbst ist als Dichtfläche ausgebildet, die z.B. gegen eine elastische Dichtung am Container selbst abdichtet.

Gemäß Anspruch 4 kann an der Arbeitsbühne ein weiterer Aufnahmebereich ausgebildet sein, der eine Leiter aufnimmt und bei in Ruhestellung befindlicher Arbeitsbühne von außen zugänglich ist. Diese verläuft ebenfalls innerhalb der Außenkontur der Containeranordnung. Bei so einer Anordnung kann zuerst eine Leiter aus diesem Aufnahmebereich entnommen bzw. herausgeschwenkt werden und anschließend die Arbeitsbühne aus ihrer Ruhestellung in ihre Arbeitsstellung gebracht werden. Die nun verfügbare horizontale Plattform kann über die Leiter bestiegen werden und dort können gegebenenfalls zusätzliche Sicherungsanordnungen angebracht bzw. aufgestellt werden. So ist ein bedienungsfreundlicher und sicherer Handhabungsablauf gewährleistet.

Gemäß Anspruch 5 ist ein zusätzliches Klappenelement vorgesehen, welches ähnlich der Arbeitsbühne zwischen einer Ruheund einer Arbeitsstellung hin- und her verschwenkbar ist, wobei das Klappenelement in der Ruhestellung an die Arbeitsbühne angrenzt und einen weiteren Bereich verschließt und in seiner Arbeitsstellung ein waagerecht verlaufendes Dachelement über der Arbeitsbühne bzw. der Plattform bildet. Auf diese Weise kann zum einen die Plattform selbst kleiner und damit leichter ausgeführt werden. Gleichzeitig kann jedoch eine große Zugangsöffnung realisiert werden und der Arbeitsbereich kann zusätzlich gegen Witterungseinflüsse geschützt werden:

Gemäß Anspruch 6 können Federelemente, insbesondere Gasfedern, die Handhabung und Fixierung der Arbeitsbühne bzw. des Dachelementes erleichtern bzw. sicherstellen.

Anspruch 7 betrifft eine Containeranordnung, insbesondere einen Tankcontainer mit einem Wandbereich, welcher eine erfindungsgemäße Arbeitsbühnenanordnung umfaßt. Gemäß Anspruch 8 ist dieser Wandbereich dann entsprechend am hinteren bzw. vorderen Stirnende des Containers angeordnet.

Ein Ausführungsbeispiel der vorliegenden Erfindung wird anhand der Figuren erläutert. Dabei zeigt
- Fig. 1A: eine Seitenansicht eines Containers auf einem Fahrzeug mit einer erfin- dungsgemäßen Arbeitsbühne,
- Fig. 1B: eine Rückansicht des Fahrzeugs und des Containers aus Fig. 1A,
- Fig. 2A: eine Seitenansicht des in Fig. 1A und 1B gezeigten Containers mit ausge- klappter Arbeitsbühne,
- Fig. 2B: eine Ansicht der in Fig. 2A gezeigten Anordnung von oben,
- Fig. 2C: eine Rückansicht der in Fig. 2A ge- zeigten Anordnung mit angesetzter Leiter,
- Fig. 3A: eine Seitenansicht mit ausgeklappter Arbeitsbühne, ausgeklapptem Klap- penelement, aufgestellter Sicherungs- anordnung und angesetzter Leiter,
- Fig. 3B: eine Ansicht von oben der in den Fig. 3A dargestellten Anordnung,
- Fig. 3C: eine Rückansicht der in Fig. 3A dar- gestellten Anordnung,
- Fig. 4A: eine Schnittansicht des Bereichs A aus Fig. 2A,
- Fig. 4B: eine alternative Dichtungsausführung in der Darstellung gemäß Fig. 4A,
- Fig. 5A: eine Fig. 1B entsprechende Rückansicht mit einer alternativen Arbeitsbühne mit zusätzlichem Aufnahmebereich und darin angeordneter Leiter, und
- Fig. 5B: die Anordnung aus Fig. 5A mit ausgeklappter Arbeitsbühne und ausgeklappter Leiter.

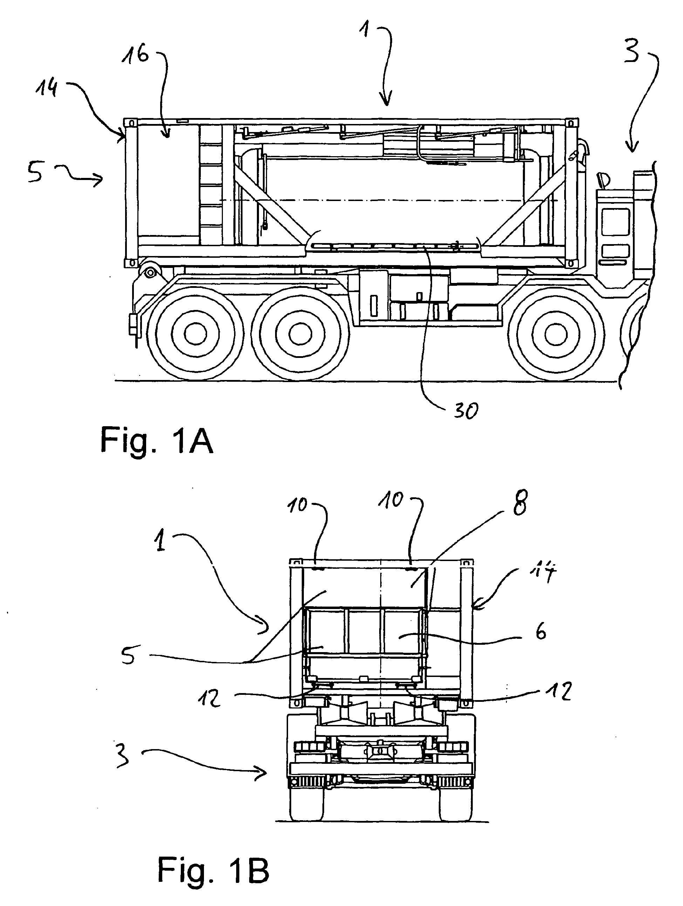

Die Fig. 1A und 1B zeigen einen Container 1 auf einem Fahrzeug 3 (in Fig. 1A teilweise dargestellt). Am hinteren Ende des Containers ist die Arbeitsbühnenanordnung 5 angeordnet.

Fig. 1B (die Rückansicht) zeigt die Arbeitsbühne 6 und das darüber angeordnet Klappenelement 8. Arbeitsbühne 6 und Klappenelement 8 befinden sich jeweils in ihrer Ruhestellung. Beide sind über Scharnieranordnungen 10 und 12 mit dem Containerrahmen 14 verbunden. In dieser Stellung verschließen die Arbeitsbühne 6 und die Klappe 8 einen Aggregatraum 16, der am hinteren Ende des Containers 1 angeordnet ist.

Fig. 1A zeigt, daß sowohl die Arbeitsbühne 6 als auch das Klappenelement 8 in ihrer Ruhestellung jeweils vollständig innerhalb der Außenkontur des Containers 1 angeordnet sind.

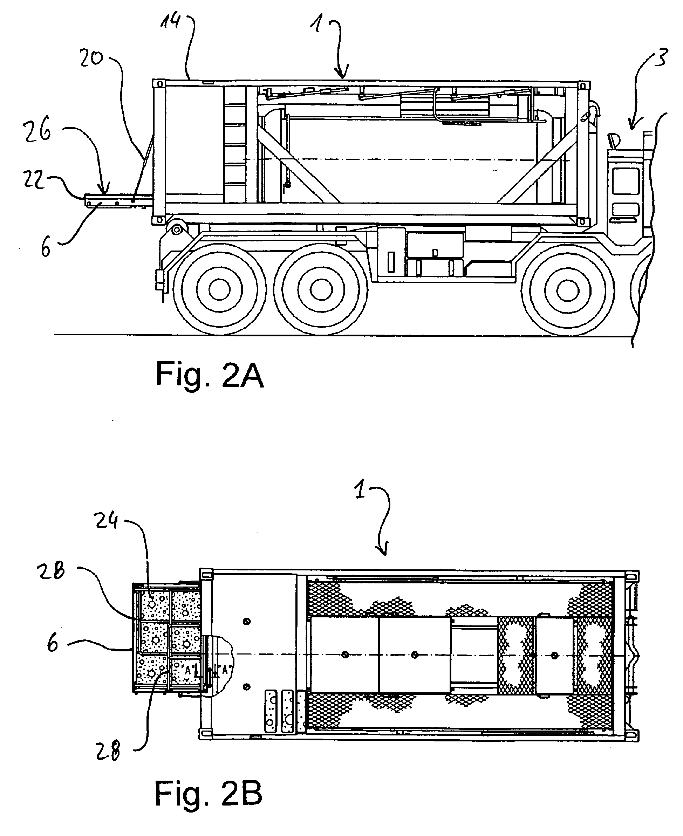

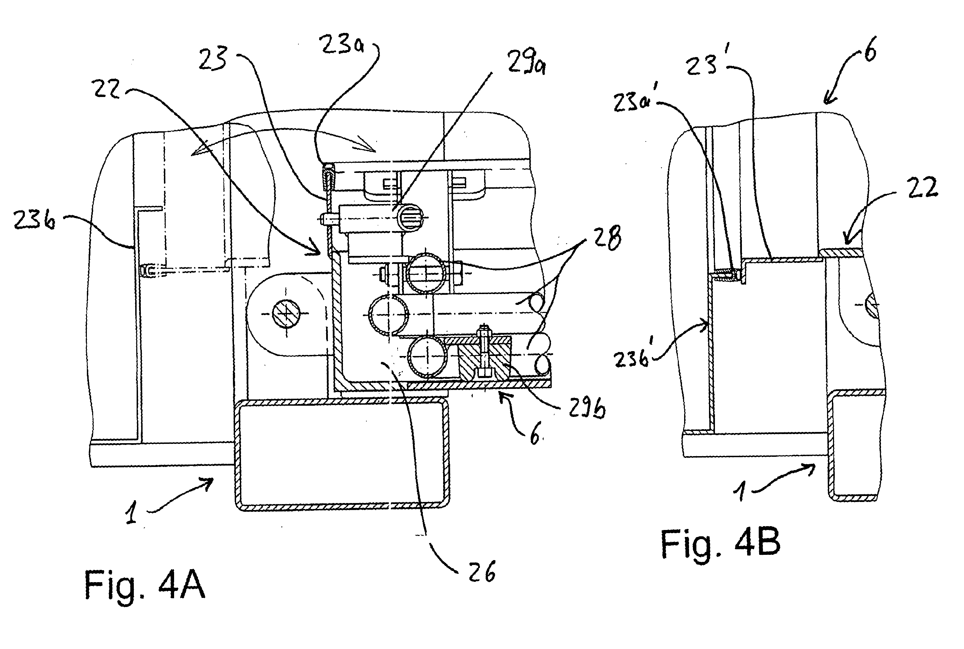

In den Fig. 2A bis 2C ist die Arbeitsbühne 6 in ausgeklappter Stellung dargestellt. Eine Gasfeder 20 dämpft auch gleichzeitig die Bewegung beim Ausklappen der Arbeitsbühne 6 und erleichtert das Einklappen. In dieser Arbeitsstellung bildet die Arbeitsbühne 6 eine Plattform. Um die Arbeitsbühne 6 herum ist ein Randbereich 22 ausgebildet, der die betretbare Arbeitsfläche 24 (siehe Fig. 2B, 4A und 4B) so hoch umrandet, daß ein Aufnahmeraum 26 über der Arbeitsfläche entsteht, der die in Fig. 2B erkennbaren Sicherungselemente 28 aufnimmt.

Fig. 4A zeigt die Dimensionierung des Aufnahmeraums 26 entsprechend der Sicherungselemente 28. An der Kantenzone 23 des Randbereichs 22 ist hier ein elastisches Dichtungselement 23a angeordnet, das bei geschlossener Arbeitsbühne 6 im Rahmenbereich 23b der Öffnung abdichtet. Die verschlossene Stellung (Ruhestellung) der Arbeitsbühne 6 ist strichpunktiert dargestellt.

Die Kantenzone 23 kann in einer anderen Ausführung (Fig. 4B) auch als (Gegen-)Dichtfläche ausgebildet sein, die an einem entsprechend elastischen Dichtungselement 23a' im Rahmenbereich 23b' der Öffnung anliegt. Bei dieser Ausführung ist die Beschädlgungsgefahr des elastischen Dichtungselements 23a' bei ausgeklappter Arbeitsbühne verringert.

Fig. 4A zeigt weiterhin die vollständig im Aufnahmeraum 26 angeordneten, klappbaren Sicherungselemente 28, die über Sicherungen 29a und/oder Pufferelemente 29b in der zusammengeklappten Stellung arretiert und fixiert werden, so daß sie auch bei eingeklappter Arbeitsbühne 6 (Ruhestellung, siehe strichpunktierte Linie) im Aufnahmeraum gehalten werden.

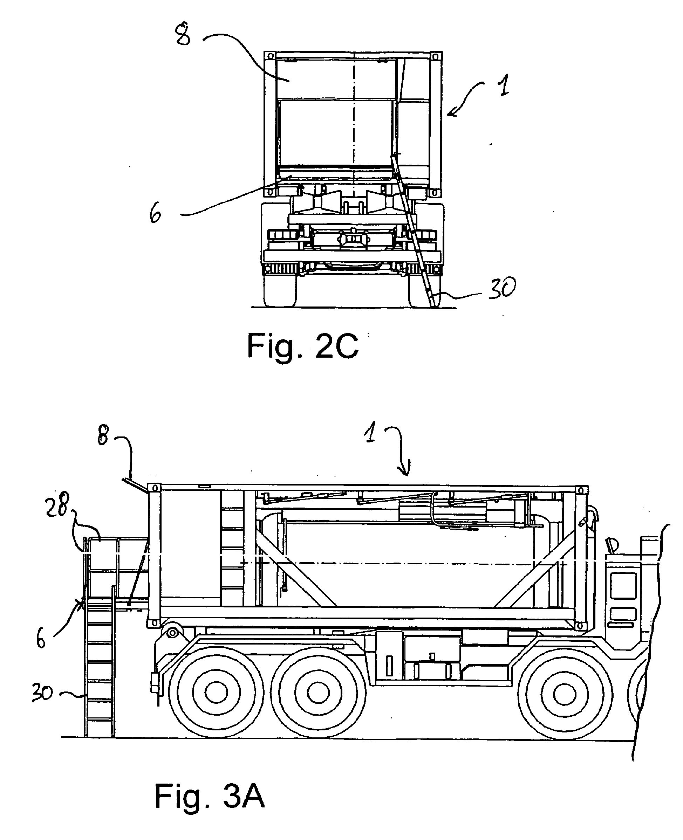

Fig. 2C zeigt zusätzlich eine Leiter 30, die vom Boden ausgehend an die Arbeitsbühne angehängt ist. Die Klappe 8 befindet sich weiterhin in ihrer Ruhestellung.

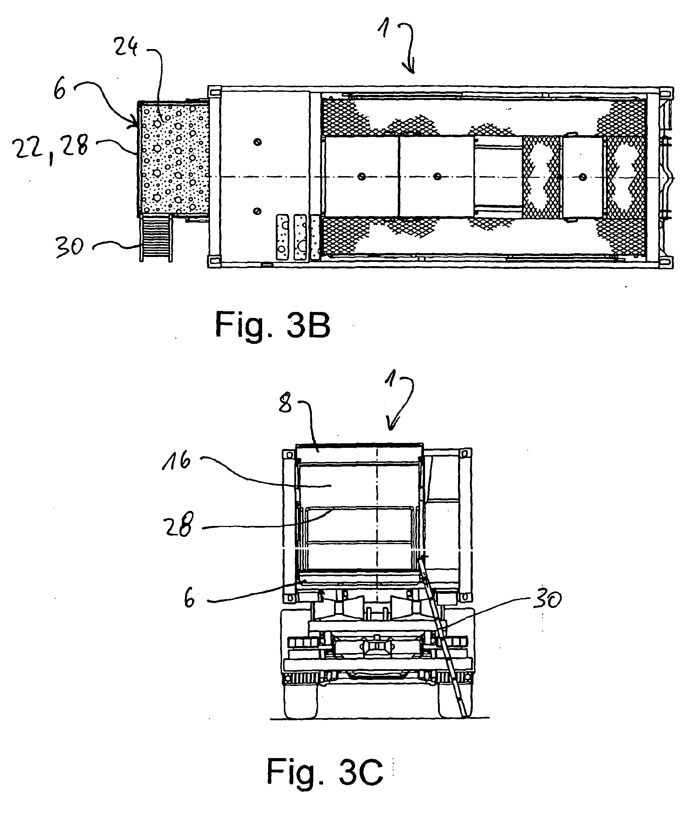

Die Fig. 3A-3C zeigen die Arbeitsbühnenanordnung 5, bei der nun alle Elemente 6, 8, 28, 30 in ihrer Arbeitsstellung angeordnet sind. Die Klappe 8 ist nun ebenfalls ausgeklappt. Die Sicherungselemente 28 sind aufgestellt und bilden ein die Arbeitsfläche 24 im Randbereich 22 umgebendes Geländer, so daß die Arbeitsfläche 24 vollständig gesichert ist. Die Leiter 30 ist angelegt. Der Aggregatraum 16 ist nun über eine maximal große, leicht zugängliche Öffnung zugänglich und die Klappe 8 bildet zusätzlich ein Dachelement und schützt gegebenenfalls gegen Regen und Witterung.

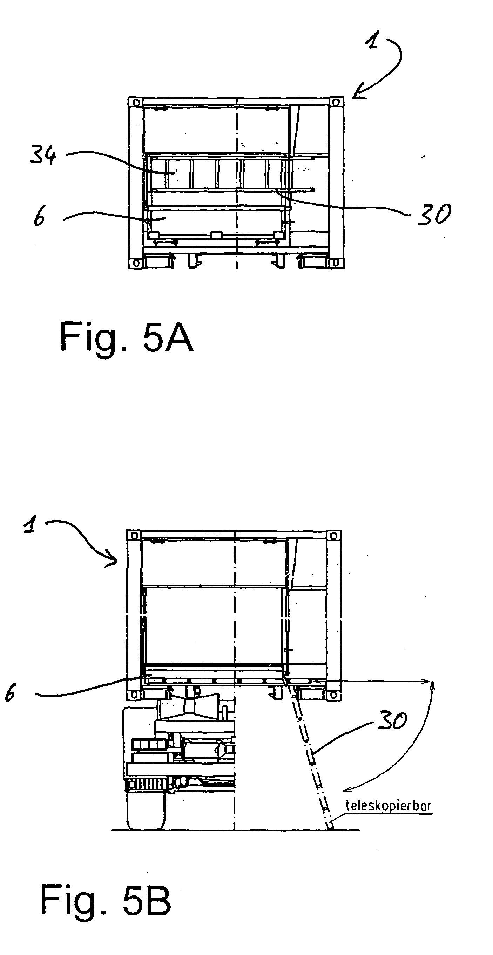

Die Leiter 30 ist im oben dargestellten Ausführungsbeispiel am Seitenrahmen des Containers 1 angeordnet, wenn sie nicht gebraucht wird (siehe Fig. 1A). In einer anderen Ausführung (Fig. 5A und 5B) kann auch an der Arbeitsbühne 6 ein von außen zugänglicher Aufnahmebereich 34 vorgesehen werden, in dem die Leiter 30, die dann gegebenenfalls einschiebbar und/oder zusammenklappbar ist, angeordnet werden kann und zwar so, daß die Leiter 30 vollständig innerhalb der äußeren Containerkonturen angeordnet ist, wenn sich die Arbeitsbühne 6 in Ihrer Ruhestellung (siehe Fig. 1A und 1B) befindet.

Weitere Ausführungen und Variationen der vorliegenden Erfindung ergeben sich für den Fachmann im Rahmen der angefügten Ansprüche.

## Patentansprüche

1. Arbeitsbühnenanordnung (5) für einen Container (1) mit:
einer verstellbaren Arbeitsbühne (6), welche zwischen einer horizontalen Arbeitsstellung und einer Ruhestellung verstellbar ist und die
so ausgebildet und angeordnet ist, daß sie in ihrer Ruhestellung vollständig innerhalb der Außenkontur des Containers verläuft und in ihrer Arbeitsstellung eine horizontale Plattform bildet, verschwenkbar ausgebildet ist, und in ihrer Ruhestellung vertikal angeordnet einen entsprechenden Wandbereich am Container (1) verschließt, **dadurch gekennzeichnet, dass** die Arbeitsbühne (6) mit aufstellbaren Sicherungselementen (28) versehen ist und einen Randbereich (22) aufweist, der einen begehbaren Arbeitsbereich (24) wenigstens teilweise so umrandet,
daß der Randbereich (22) einen an den Arbeitsbereich (24) angrenzenden Aufnahmeraum (26) definiert, der die aufstellbaren Sicherungselemente (28) aufnimmt, so daß diese in ihrer zusammengeklappten Stellung vollständig innerhalb der Randkonturen verlaufen, und bei in Ruhesteilung befindlicher Arbeitsbühne von außen unzugänglich ist.

2. Arbeitsbühnenanordnung (5) nach Anspruch 1, bei welcher die aufgestellten Sicherungselemente (28) ein die Arbeitsfläche (24) im Randbereich umgebendes Geländer bilden.

3. Arbeitsbühnenanordnung (5) nach Anspruch 1 oder 2, bei welcher eine Kantenzone (23; 23') des Randbereichs (22) als Dichtungselement ausgebildet ist.

4. Arbeitsbühnenanordnung nach einem der vorhergehenden Ansprüche, bei welcher an der Arbeitsbühne (6) ein Aufnahmebereich (34) zur Aufnahme einer Leiter (30) ausgebildet ist, der so angeordnet und ausgeführt ist, daß bei in Ruhestellung befindlicher Arbeitsbühne (6) eine darin angeordnete Leiter (30) vollständig innerhalb der Außenkontur des Containers (1) verläuft und diese von außen zugänglich ist.

5. Arbeitsbühnenanordnung (5) nach einem der vorhergehenden Ansprüche, bei welcher ein Klappenelement (8) vorgesehen ist, welches zwischen einer Arbeitsstellung und einer Ruhestellung verschwenkbar ist, wobei das Klappenelement (8) an die in ihrer Ruhestellung befindliche Arbeitsbühne (6) angrenzt und einen entsprechenden, an die Arbeitsbühne (6) angrenzenden Bereich verschließt und in seiner Arbeitsstellung ein etwa waagerecht verlaufendes Dachelement über der Arbeitsfläche (6) bildet.

6. Arbeitsbühnenanordnung (5) nach einem der vorhergehenden Ansprüche, wobei an der Arbeitsbühne (6) und/oder dem Klappenelement (8) Federelemente, insbesondere Gasfedern (20), vorgesehen sind, die Arbeitsbühne (6) und/oder Klappenelement (8) in ihrer jeweiligen Arbeits- bzw. Ruhestellung fixieren und/oder das manuelle Verstellen unterstützen.

7. Containeranordnung (1), insbesondere ein Tankcontainer, der einen Wandbereich aufweist, welcher mit einer Arbeitsbühnenanordnung (5) nach einem der vorhergehenden Ansprüche versehen ist.

8. Containeranordnung (1) nach Anspruch 7 bei welcher der Wandbereich am hinteren bzw. vorderen Stirnende des Containers angeordnet ist und einen Aggregatraum (16) begrenzt.

## Claims

1. A working platform arrangement (5) for a container (1) with: a displaceable working platform (6) which is displaceable between a horizontal working position and a rest position and which is designed and arranged in such a way that in its rest position it extends completely inside the external contour of the container and in its working position it forms a horizontal platform, it is designed so as to be pivotable, and when arranged vertically in its rest position it closes a corresponding wall region on the container (1), **characterized in that** the working platform (6) is provided with securing elements (28) capable of being set up and has an edge region (22) which borders at least in part a working area (24) capable of being walked upon, in such a way that the edge region (22) defines a receiving space (26) which is adjacent to the working area (24) and which receives the securing elements (28) capable of being set up, so that the latter extend completely inside the edge contours in their folded-up position, and is inaccessible from the outside when the working platform is in the rest position.

2. A working platform arrangement (5) according to claim 1, in which the securing elements (28) when set up form a railing surrounding the working area (24) in the edge region.

3. A working platform arrangement (5) according to claim 1 or 2, in which a rim zone (23; 23') of the edge region (22) is designed in the form of a sealing element.

4. A working platform arrangement according to any one of the preceding claims, in which the working platform (6) has formed on it a receiving area (34) for receiving a ladder (30), which receiving area (34) is arranged and designed in such a way that when the working platform (6) is in the rest position a ladder (30) arranged therein extends completely inside the external contour of the container (1) and it is accessible from the outside.

5. A working platform arrangement (5) according to any one of the preceding claims, in which a flap element (8) is provided, which is pivotable between a working position and a rest position, wherein the flap element (8) is adjacent to the working platform (6) present in its rest position and closes a corresponding region adjacent to the working platform (6) and in its working position forms a roof element extending substantially horizontally above the working area (6).

6. A working platform arrangement (5) according to any one of the preceding claims, wherein spring elements, in particular gas springs (20), which fix the working platform (6) and/or the flap element (8) in the respective working or rest position thereof and/or assist the manual displacement, are provided on the working platform (6) and/or the flap element (8).

7. A container arrangement (1), in particular a tank container, which has a wall region which is provided with a working platform arrangement (5) according to any one of the preceding claims.

8. A container arrangement (1) according to claim 7, in which the wall region is arranged at the rear or the front end face of the container and bounds an aggregate space (16).

## Revendications

1. Dispositif de plate-forme de travail (5) pour un conteneur (1), avec une plate-forme de travail réglable (6), qui est réglable entre une position de travail horizontale et une position de repos et qui est réalisée et disposée de telle manière que, dans sa position de repos, elle se trouve entièrement à l'intérieur du contour extérieur du conteneur et que, dans sa position de travail, elle forme une plate-forme horizontale, qui est réalisée de façon pivotante et qui, disposée verticalement dans sa position de repos, ferme une région de paroi correspondante sur le conteneur (1), **caractérisé en ce que** la plate-forme de travail (6) est munie d'éléments de fixation relevables (28) et présente une région de bord (22), qui encadre au moins partiellement une région de travail praticable (24), **en ce que** la région de bord (22) définit un espace de réception (26) adjacent à la région de travail (24) et qui contient les éléments de fixation relevables (28), de telle manière que ceux-ci se trouvent, dans leur position rabattue, entièrement à l'intérieur des contours du bord et ne soient pas accessibles de l'extérieur lorsque la plate-forme de travail se trouve dans sa position de repos.

2. Dispositif de plate-forme de travail (5) selon la revendication 1, dans lequel les éléments de fixation relevés (28) forment un garde-corps entourant la surface de travail (24) dans la région du bord.

3. Dispositif de plate-forme de travail (5) selon la revendication 1 ou 2, dans lequel une zone de bord (23; 23') de la région de bord (22) est réalisée sous la forme d'un élément d'étanchéité.

4. Dispositif de plate-forme de travail selon l'une quelconque des revendications précédentes, dans lequel il se trouve, sur la plate-forme de travail (6), une région de logement (34) destinée à recevoir une échelle (30), qui est disposée et réalisée de telle manière que, lorsque la plate-forme de travail (6) se trouve en position de repos, une échelle (30) disposée dans celle-ci se trouve entièrement à l'intérieur du contour extérieur du conteneur (1) et que celle-ci soit accessible de l'extérieur.

5. Dispositif de plate-forme de travail (5) selon l'une quelconque des revendications précédentes, dans lequel il est prévu un élément rabattable (8), qui peut pivoter entre une position de travail et une position de repos, dans lequel l'élément rabattable (8) est adjacent à la plate-forme de travail (6) se trouvant dans sa position de repos et ferme une région correspondante adjacente à la plate-forme de travail (6) et forme, dans sa position de travail, un élément de toit s'étendant sensiblement à l'horizontale au-dessus de la surface de travail (6).

6. Dispositif de plate-forme de travail (5) selon l'une quelconque des revendications précédentes, dans lequel il est prévu sur la plate-forme de travail (6) et/ou sur l'élément rabattable (8) des éléments de ressort, en particulier des amortisseurs à gaz (20), qui fixent la plate-forme de travail (6) et/ou l'élément rabattable (8) dans leur position de travail ou de repos respective et/ou soutiennent le réglage manuel.

7. Dispositif de conteneur (1), en particulier un conteneur-citerne, qui présente une région de paroi, qui est munie d'un dispositif de plate-forme de travail (5) selon l'une quelconque des revendications précédentes.

8. Dispositif de conteneur (1) selon la revendication 7, dans lequel la région de paroi est disposée à l'extrémité arrière ou à l'extrémité avant du conteneur et délimite une chambre (16) contenant l'ensemble.
